# EUROPEAN PATENT APPLICATION

(11) **EP 1 965 319 A2**
(43) Date of publication of application: **03.09.2008**
(21) Application number: 08151597.5
(22) Date of filing: 19.02.2008
(51) Int. Cl.: G06F 17/30

(54) **Transaction processing system and method**

(30) Priority: 28.02.2007 AU 2007901043
(71) Applicant: ACEI AB, 120 07 Stockholm (SE)
(72) Inventor: Abrink, Ulf, 746 33, Balsta (SE); Andersson, Sven Hakan, 17264 Sundbyberg (SE)
(74) Representative: Ketelaars, Maarten F.J.M.

(57) **Abstract**

A method of conducting transactions in a gaming system comprising: providing a back end database; providing a front end database comprising at least one front end transactional data table partitioned into a plurality of time interval partitions; (a) conducting transactions for a client in one of the time interval partitions of the front end transactional data table; (b) locking the time interval partition in which transactions have been conducted; and (c) updating the back end database with transactions from the locked partition to synchronize the back end database to the front end database.

## Description

### Field

The present invention relates to a transaction processing system and a transaction processing method.

### Background to the Invention

In the gaming industry, there is a move towards server based gaming systems where the majority of the gaming functions are implemented on a server and the gaming machines played by players are clients of the server.

For such implementations to be effective, transactions between the gaming machines (also known as gaming terminals) and the server need to be carried out in real-time. That is, without any delay that is apparent to the player at the gaming machine.

Where there are a larger number of gaming machines connecting to a server, the server can be exposed to high loads and hence in a gaming system with a large number of gaming machines, the server may require significant CPU processing power, particularly in light of the fact that the relationship between increased load and CPU power is not linear. This can result in a high investment cost for hardware.

Accordingly, there is a need for an architecture for a gaming system that is capable of handling high transaction loads, and within such an architecture, a need to manage transactions efficiently.

### Summary of the Invention

In a first aspect, the invention provides a method of conducting transactions in a gaming system comprising:
providing a back end database;
providing a front end database comprising at least one front end transactional data table partitioned into a plurality of time interval partitions;

(a) conducting transactions for a client in one of the time interval partitions of the front end transactional data table;
(b) locking the time interval partition in which transactions have been conducted; and
(c) updating the back end database with transactions from the locked partition to synchronize the back end database to the front end database.

In an embodiment, the method comprises:
(d) conducting transactions in a succeeding time interval partition after locking the partition and repeating steps (b) and (c) in respect of the successive time interval partition.

In an embodiment, the method comprises updating the back end database by copying the partition from the front end database into a corresponding partition in a back end transactional data table comprising a plurality of time interval partitions in the back end database.

In an embodiment, the method comprises repeating steps (a) to (c) until each of the plurality of time interval partitions is used and then conducting the next transaction in a first time interval partition.

In a second aspect, the invention provides a transaction processing system comprising:
a back end server comprising a back end database; and;
a front end server comprising a front end database comprising at least one front end transactional data table partitioned into a plurality of time interval partitions,
the transaction processing system arranged to:
   (a) conduct transactions for a client in one of the time interval partitions of the front end transactional data table;
   (b) lock the time interval partition in which transactions have been conducted; and
   (c) update the back end database with transactions from the locked partition to synchronize the back end database to the front end database.

In an embodiment, the back end server comprises a synchronization controller arranged to control the synchronization of the front and back end databases.

In an embodiment, the back end database comprises a partition synchronization table that holds a record of the last partition that was synchronized.

In an embodiment, the back end server comprises a partition log table to which log entries are written to log updating of the back end database.

In an embodiment, the back end database comprises a back end transactional data table comprising a plurality of time interval partitions, the back end transactional data table corresponding to the front end transactional data table, and wherein the back end database is updated by copying the partition from the front end database into a corresponding partition in the back end database.

### Brief Description of the Drawings

An embodiment will now be described to illustrate the invention in relation to the accompanying drawings, in which:

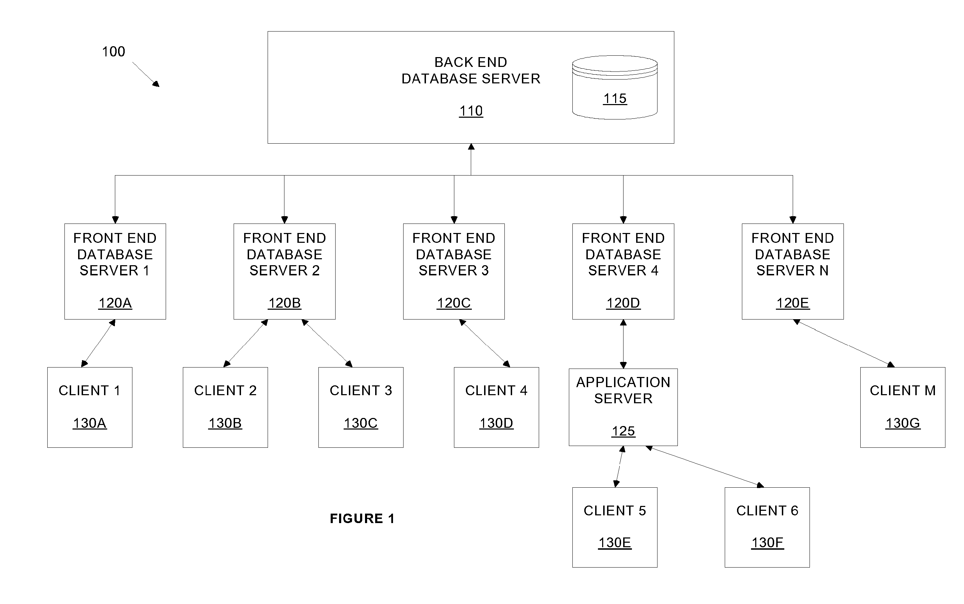

Figure 1 is a block diagram of a transaction processing system;
Figure 2 is a flow chart of a transaction processing method; and
Figure 3 is a block diagram showing more detail of the transaction processing system

### Detailed Description

Referring to the drawings there is shown a transaction processing system 100 and method for a database based gaming system that is designed to handle high loads in a real-time environment and that incorporates database synchronization.

The transaction processing system 100 has a back end database server (BEDS) 110 that is the focal point of the system where all data needed by different nodes is shared. The back end database server 110 is also where all client data is stored. The gaming system 100 has a plurality (N) of front end database servers (FEDS) 120A-120E adapted to receive connection requests from a plurality (M) of clients 130A-130G. Clients 130E and 130F are shown as connecting to front end database server 120D via an application server 125 to illustrate that depending on the embodiment, none, some or all of the clients 130A-130G may connect to a front end database server 120 via an application server 125.

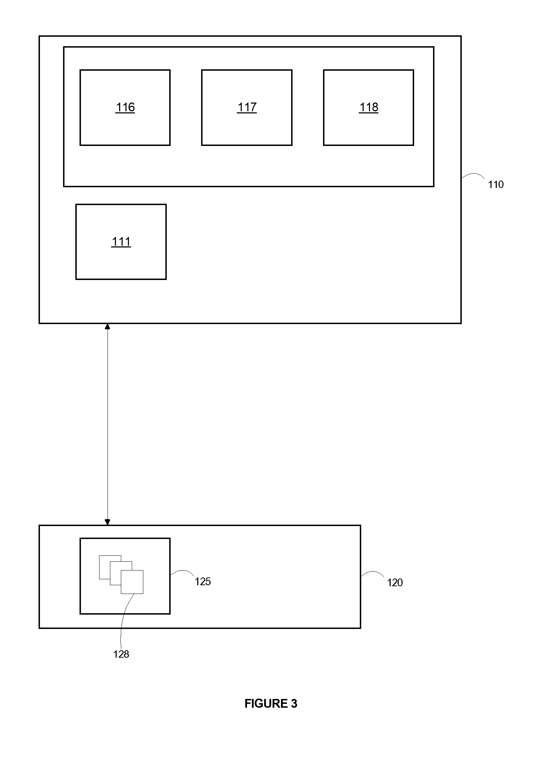

As shown in Figure 3 each front end database server has a front end database 125 having a plurality of transactional data tables 128 in which transactions between the client and the front end database. Each transactional data table 128 is partitioned using time-based, recurring interval partitions appropriate for the application demands. For example sixty, one minute partitions. The back end database 115 has a corresponding set of transactional data tables so that transactional data in the transactional data tables on the front end database can be copied, partition by partition, to the corresponding transactional data tables in the back office database 115.

The sets of transactional data tables will vary from embodiment to embodiment. In one embodiment, there are five transactional data tables used to process transactions at the front end database server and corresponding five tables in the back end database server. In this embodiments the five tables are:
1. Player_Session_Log which summarises the information for a player session and which is created when the session ends.
2. Player_Session_Transaction which contains the detailed monetary event information for a player session. It is written as the event occurs with the exception of bet and win data which is written when a game session ends.
3. Game_Session_Log which contains the summary information for a game session and is created when the session ends.
4. Game_Round_Event which contains detailed event data including bet and win per gaming event.
5. Entitlement_History which contains log information for entitlement events.

The synchronization of the two databases is implemented as a batch job run by a synchronization controller of the back end server, with a separate batch job being conducted for each front end database. The batch job runs every partition interval. Therefore, in the case of minute partitions, the batch job will run every minute.

The back end database contains three tables 116, 117, 118 to handle the synchronization functionality. The first table "Partition_Sync" is the synchronization partition and holds one record for each transaction table and front end database to synchronise. It is used to keep track of the last synchronise partition by storing a partition key, which is stored with the timestamp that it executed.

The second table "Partition_Sync Partition" 117 holds one record for each transaction table partition and front end database that is to be synchronised. It is used to protect the partition from other access attempts during the copy and truncate phase.

The third table, "Partition_Sync_Log" is used to log the times and the numbers of records removed. Log entry records are only written if records are moved.

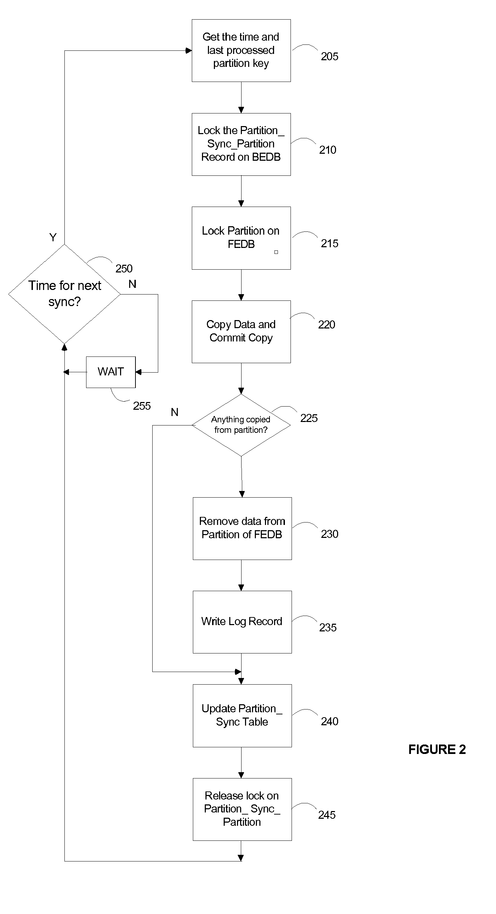

The process will be described further in relation to the flowchart of Figure 2. A person skilled in the art will appreciate that the process is repeated cyclically so at step 205 is necessary to get the time and last processed partition key 205 from the Partition_Sync table 116. The synchronization is controlled by a synchronization controller of the back end database server 110 which may be implemented, for example, by a thread running on the back end database server 110. It will be appreciated that the process is replicated by the back end database server 110 for each front end database server 120.

The method then involves locking 210 the Partition_Sync_Partition record on the back end database corresponding to the retrieved partition key. In the preferred embodiment, the method employs a safe timing interval of two partitions before and after the current partition to make sure that data is not obstructed by the synchronization process. Therefore, at step 210 the partition records are locked for the current minute and each other minute to the current minute plus and minus two minutes on the back end database. At step 215 the partition to be synchronized is locked in the front end database to prevent any new data being written during the move process and transactions are then processed in the succeeding partition on the front end database. At step 220, the data is copied from the front end transaction database to the destination in Partition_Sync Partition specified by the partition key. The copy is then committed into Partition_Sync_Partition as the subsequent truncation (removal) process on the front end database cannot take place while there is an active transaction in the back end database. At step 225 it is determined whether anything was copied from the partition and if something was copied, the data is removed from the partition on the front end database 230, thus releasing the partition for storage of new data. A record is then written to the log record 235 specifying which files have been updated.

The Partition_Sync table is then updated 240 to indicate which is the next partition key and the lock is released on Partition_Sync_Partition 245.

A person skilled in the art will appreciate that if nothing is to be copied at 225 the method proceeds to step 240. The process then proceeds to a wait cycle 250, 255 where it is determined whether the next synchronization should begin has occurred.

Various modifications will be apparent to persons skilled in the art and should be considered as falling within the scope of the invention described herein.

It is to be understood that, if any prior art publication is referred to herein, such reference does not constitute an admission that the publication forms a part of the common general knowledge in the art, in Australia or any other country.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

## Claims

1. A method of conducting transactions in a gaming system comprising:
providing a back end database;
providing a front end database comprising at least one front end transactional data table partitioned into a plurality of time interval partitions;
(a) conducting transactions for a client in one of the time interval partitions of the front end transactional data table;
(b) locking the time interval partition in which transactions have been conducted; and
(c) updating the back end database with transactions from the locked partition to synchronize the back end database to the front end database.

2. A method as claimed in claim 1 comprising:
(d) conducting transactions in a succeeding time interval partition after locking the partition and repeating steps (b) and (c) in respect of the successive time interval partition.

3. A method as claimed in claim 1 or claim 2, comprising updating the back end database by copying the partition from the front end database into a corresponding partition in a back end transactional data table comprising a plurality of time interval partitions in the back end database.

4. A method as claimed in any one of claims 1 to 3, comprising repeating steps (a) to (c) until each of the plurality of time interval partitions is used and then conducting the next transaction in a first time interval partition.

5. A transaction processing system comprising:
a back end server comprising a back end database; and;
a front end server comprising a front end database comprising at least one front end transactional data table partitioned into a plurality of time interval partitions,
the transaction processing system arranged to:
(a) conduct transactions for a client in one of the time interval partitions of the front end transactional data table;
(b) lock the time interval partition in which transactions have been conducted; and
(c) update the back end database with transactions from the locked partition to synchronize the back end database to the front end database.

6. A transaction processing system as claimed in claim 5, wherein the back end server comprises a synchronization controller arranged to control the synchronization of the front and back end databases.

7. A transaction processing system as claimed in claim 5 or claim 6, wherein the back end database comprises a partition synchronization table that holds a record of the last partition that was synchronized.

8. A transaction processing system as claimed in any one of claims 5 to 7, wherein the back end server comprises a partition log table to which log entries are written to log updating of the back end database.

9. A transaction processing system as claimed in any one of claims 5 to 8, wherein the back end database comprises a back end transactional data table comprising a plurality of time interval partitions, the back end transactional data table corresponding to the front end transactional data table, and wherein the back end database is updated by copying the partition from the front end database into a corresponding partition in the back end database.
